# EUROPÄISCHE PATENTSCHRIFT

(11) **EP 0 273 308 B1**
(45) Veröffentlichungstag und Bekanntmachung des Hinweises auf die Patenterteilung: **21.09.1994**
(21) Anmeldenummer: 87118721.7
(22) Anmeldetag: 17.12.1987
(51) Int. Cl.: B02C 21/02

(54) **Kompostiergerät**
Composting apparatus
Appareil de compostage

(30) Priorität: 23.12.1986 DE 3644210
(43) Veröffentlichungstag der Anmeldung: 06.07.1988
(73) Patentinhaber: Doppstadt, Werner, D-42555 Velbert (DE)
(72) Erfinder: Doppstadt, Werner, D-42555 Velbert (DE)
(74) Vertreter: Wolgast, Rudolf, Dipl.-Chem. Dr.

(56) Entgegenhaltungen:
- DE-A- 2 912 218
- FR-A- 2 312 599
- FR-A- 2 540 330

## Beschreibung

Die Erfindung betrifft ein Kompostiergerät zum Zerkleinern von organischem Abfall, insbesondere von Holz, enthaltend
(a) einen trogartigen Behälter zur Aufnahme des zu zerkleinernden Materials, der auf einem Gestell angeordnet ist;
(b) eine Fördereinrichtung auf dem Boden dieses trogartigen Behälters, welche zu einem Ende des trogartigen Behälters hin fördert;
(c) ein Schlagwerk, das den trogartigen Behälter an dem besagten einen Ende abschließt;
(d) eine entfernt von dem Schlagwerk angeordnete Antriebskraftmaschine zum Antrieb der Fördereinrichtung und des Schlagwerks;
(e) ein Schutzschild an einem dem Schlagwerk gegenüberliegenden Ende des trogartigen Behälters; und
(f) Kraftübertragungsmittel, welche die Antriebskraftmaschine und das Schlagwerk verbinden und sich längs des trogartigen Behälters erstrecken.

Ein solches Kompostiergerät ist dargestellt und beschrieben in der DE-A-3 517 684. Bei dem dort dargestellten und beschriebenen Ausführungsbeispiel ist das Kompostiergerät auf der Pritsche eines Lastkraftwagens angeordnet und wird durch die Brennkraftmaschine des Lastkraftwagens über die bei dem Lastkraftwagen üblicherweise vorhandenen mechanischen oder hydraulischen Kraftanschlüsse angetrieben. Es ist durch die DE-A-3 517 684 auch bekannt, das Kompostiergerät von dem Lastkraftwagen mittels einer üblichen Schnellwechselvorrichtung abzunehmen. Der Lastkraftwagen steht dann auch für andere Zwecke zur Verfügung. In diesem Fall ist aber das Kompostiergerät nicht mehr benutzbar, da der Antrieb durch den Lastkraftwagen wegfällt.

Die bekannte Anordnung ist auch wegen des schweren Schlagwerkes stark hecklastig.

Aus der FR-A-2 312 599 ist ein Zerkleinerungsgerät bekannt, bei dem ein Hammerbrecher auf einem Chassis angeordnet ist; an dem Chassis ist eine nach vorn und oben vorstehende Tragkonstruktion für einen Antriebsmotor und einen Endlosförderer angebracht. Das hinten in den Hammerbrecher eingegebene Material wird in zerkleinerter Form unter Atrennung von Eisenteilen auf den Endlosförderer und durch diesen in einen vorn befindlichen Verdichter eingegeben. Das zerkleinerte, verdichtete Material wird von dem verdichter in paketform ausgegeben. Das Chassis ruht auf Rädern, die sich unter dem Hammerbrecher befinden. Das Gerät kann fahrend betrieben werden, indem eine von dem Chassis vorstehende Deichsel an einen Lastwagen angehängt wird. Im stehenden Betrieb wird das Chassis an den vier Ecken durch Stützen stabilisiert.

Weiterhin ist aus der DE-A-2 912 218 eine Zufuhreinrichtung für eine stationäre Messerwalze bekannt, bei der in Förderrichtung eines Zufuhrförderers auf der Eingabeseite eine Abweiseinrichtung angeordnet ist, durch die ein Durchlaßspalt für das zu zerkleinernde Werkstück bestimmt wird und überschüssiges Material zur Eingabeseite zurückgefördert wird. Der Abweiseinrichtung folgt eine Andruckwalze, die durch den Durchtrittsspalt hindurchtretende Werkstücke an den Zufuhrförderer andrückt. Das Werkstück wird durch die Messerwalze zerkleinert, und das zerkleinerte Material durch einen Austrittsschacht nach unten ausgegeben.

Der Erfindung liegt die Aufgabe zugrunde, ein Kompostiergerät der eingangs genannten Art zu schaffen, das einen Betrieb unabhängig von der Brennkraftmaschine eines Lastkraftwagens ermöglicht und durch Eliminierung der Hecklastigkeit leichter handhabbar wird.

Erfindungsgemäß wird diese Aufgabe dadurch gelöst, daß
(g) der trogartige Behälter auf einem eigenen fahrbaren Gestell angeordnet ist, das sich über die Länge des trogartigen Behälters und das Schutzschild erstreckt;
(h) die Antriebskraftmaschine und das Schlagwerk an gegenüberliegenden Enden des fahrbaren Gestells angeordnet sind und die Antriebskraftmaschine von dem Schutzschild abgedeckt ist; und
(i) die Kraftübertragungsmittel an dem trogartigen Behälter von der Antriebskraftmaschine zum Schlagwerk verlaufen.

Die Antriebskraftmaschine macht das Kompostiergerät unabhängig von einem Fremdantrieb. Das Kompostiergerät kann also auch nach Abnehmen von dem Lastkraftwagen als quasistationäres Gerät benutzt werden. Außerdem bildet aber die schwere Antriebskraftmaschine ein Gegengewicht gegen das Schlagwerk. Das Kompostiergerät läßt sich daher trotz seines höheren Gewichts leichter handhaben als das bekannte Kompostiergerät.

Ausgestaltungen der Erfindung sind Gegenstand der Unteransprüche.

Ein Ausführungsbei spiel der Erfindung ist nachstehend unter Bezugnahme auf die zugehörige Zeichnung näher erläutert, die eine schematische Seitenansicht eines Kompostiergeräts zeigt.

Auf einem Gestell 10 sitzt ein trogartiger Behälter 12. Auf dem Boden dieses Behälters 12 ist eine Fördereinrichtung 14 angeordnet. Die Fördereinrichtung 14 fördert zu dem in der Figur rechten Ende des Behälters 12 hin. An diesem Ende ist ein Schlagwerk 16 angeordnet. Das Schlagwerk 16 schließt den Behälter 12 ab. Das Schlagwerk 16 ist nach Art der DE-OS 3 517 684 aufgebaut und deshalb hier nicht im einzelnen dargestellt und beschrieben. Das Schlagwerk 16 enthält Schlegel, die um eine Umlaufachse 18 innerhalb des strichpunktierten, zylindrischen Bereiches 20 umlaufen. Material , z.B. Äste, Bretter, Baumstämme u.dgl., welches in den Behälter 12 hineingeworfen wird, wird von der Fördereinrichtung 14 zu dem Schlagwerk 16 transportiert und dort so lange mit den Schlegeln bearbeitet, bis die Holzstücke oder -teile zu kleinen Stückchen zerschlagen sind. Das ist in der DE-OS 3 517 684 eingehend beschrieben.

An dem Behälter 12 ist an dessen dem Schlagwerk 16 abgewandten anderen Ende eine Antriebskraftmaschine 22 angeordnet. Die Antriebskraftmaschine 22 sitzt auf dem Gestell 10 und ist durch einen Schutzschild 24 abgedeckt, der am Ende des Behälters 12 angeformt ist. Die Antriebskraftmaschine 22 ist über Kraftübertragungsmittel 26, die sich längs des trogartigen Behälters 12 erstrecken, mit dem Schlagwerk 16 gekuppelt.

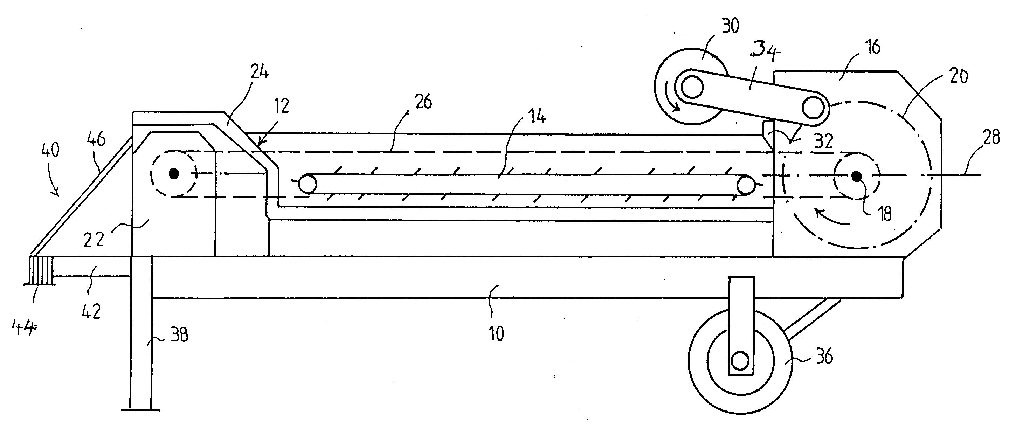

Bei der DE-OS 3 517 684 ist vor dem Schlagwerk 16 ein schwerer Kettenvorhang angeordnet. Dieser Kettenvorhang soll verhindern, daß Material von dem Schlagwerk nach hinten weggeschleudert werden kann. Bei dem bekannten Kompostiergerät ist die Fördereinrichtung unterhalb der Umlaufachse des Schlagwerks angeordnet. Dadurch treffen die Schlegel auch von "unten rechts" in Fig.2 der DE-OS 3 517 684 auf das Material und schleudern es nach "oben links", also entgegen der Förderrichtung der Fördereinrichtung in den Behälter zurück.

Bei der vorliegenden Ausführung ist dagegen die Fördereinrichtung 14 in oder oberhalb einer durch die Umlaufachse 18 gehenden Ebene 28 angeordnet. Auf diese Weise wird das Material höchstens vertikal von unten getroffen, so daß es vertikal nach oben gegen die dort vorgesehene Prallwand geschleudert wird.

Statt des Kettenvorhanges ist eingangsseitig von dem Schlagwerk 16 eine schwere, sich quer oberhalb der Fördereinrichtung 14 erstreckende Walze 30 angeordnet, die auf Anschlagmitteln 32 abgestützt und durch einen Arm 34 nach oben beweglich geführt ist. Die Walze 30 ist angetrieben im Sinne eines Einziehens des zu zerbrechenden Materials in das Schlagwerk 16. In der Figur wird die Walze 30, wie angedeutet, entgegen dem Uhrzeigersinn angetrieben. Durch diese Walze 30 wird das Material für die Bearbeitung durch das Schlagwerk 16 zusammengedrückt.

Der trogförmige Behälter 12 ist auf der Seite des Schlagwerks 16 auf einem Paar von Rädern 36 abgestützt. An dem trogförmigen Behälter 12 kann auf der Seite der Antriebskraftmaschine 25 ein Paar von Stützen 38 lösbar angebracht werden. Weiterhin sind an dem trogförmigen Behälter 12 auf der Seite der Antriebskraftmaschine 22 Kupplungsmittel 40 für eine Zugvorrichtung anbringbar. Diese Kupplungsmittel 40 enthalten eine an dem Gestell 10 in der Mitte der linken Stirnfläche angebrachte Zugstange 42, die an ihrem Ende eine Kupplungsbuchse 44 trägt. Die Kupplungsbuchse 44 ist mit zwei v-förmig angeordneten Streben 46 verbunden, die mit ihren anderen Enden an dem Schild 24 für die Antriebskraftmaschine 22 befestigt sind. Die Kupplungsbuchse 44 ist somit über Streben 42,46 mit drei Punkten der Struktur verbunden.

Wenn am Einsatzort das Kompostiergerät geringfügig versetzt wird, dann kann dies dadurch geschehen daß der zum Beschicken des Behälters 12 üblicherweise vorhandene Schaufellader an der Kupplungsbuchse 44 angreift. Nach Entfernen der Stützen 38, sofern erforderlich, kann dann das ganze Kompostiergerät angehoben und auf den Rädern 36 vorgezogen werden. Die Kupplungsbuchse 44 kann auch zum Ankuppeln des Kompostiergerätes an ein Zugfahrzeug benutzt werden. Es ist aber auch möglich, das Kompostiergerät auf die Ladefläche eines geeigneten Lastkraftwagens zu ziehen.

## Patentansprüche

1. Kompostiergerät zum Zerkleinern von organischem Abfall, insbesondere von Holz, enthaltend
(a) einen trogartigen Behälter (12) zur Aufnahme des zu zerkleinernden Materials, der auf einem Gestell (10) angeordnet ist;
(b) eine Fördereinrichtung (14) auf dem Boden dieses trogartigen Behälters (12), welche zu einem Ende des trogartigen Behälters (12) hin fördert;
(c) ein Schlagwerk (16), das den trogartigen Behälter (12) an dem besagten einen Ende abschließt;
(d) eine entfernt von dem Schlagwerk (16) angeordnete Antriebskraftmaschine (22) zum Antrieb der Fördereinrichtung (14) und des Schlagwerks (16);
(e) ein Schutzschild (24) an einem dem Schlagwerk (16) gegenüberliegenden Ende des trogartigen Behälters (12);
(f) Kraftübertragungsmittel (26), welche die Antriebskraftmaschine (22) und das Schlagwerk (16) verbinden und sich längs des trogartigen Behälters (12) erstrecken,
dadurch gekennzeichnet, daß
(g) der trogartige Behälter (12) auf einem eigenen fahrbaren Gestell (10) angeordnet ist, das sich über die Länge des trogartigen Behälters (12) und das Schutzschild (24) erstreckt;
(h) die Antriebskraftmaschine (22) und das Schlagwerk (16) an gegenüberliegenden Enden des fahrbaren Gestells (10) angeordnet sind und die Antriebskraftmaschine (22) von dem Schutzschild (24) abgedeckt ist; und
(i) die Kraftübertragungsmittel (26) an dem trogartigen Behälter (12) von der Antriebskraftmaschine (22) zum Schlagwerk (16) verlaufen.

2. Kompostiergerät nach Anspruch 1, dadurch gekennzeichnet, daß die Fördereinrichtung (14) in oder oberhalb einer durch die Umlaufachse (18) des Schlagwerks (16) verlaufenden Horizontalebene (28) angeordnet ist.

3. Kompostiergerät nach Anspruch 1 oder 2, dadurch gekennzeichnet, daß an dem trogartigen Behälter (12) einlaßseitig von dem Schlagwerk (16) eine schwere, sich quer oberhalb der Fördereinrichtung (14) erstreckende Walze (30) angeordnet ist; die auf Anschlagmitteln (32) abgestützt und nach oben beweglich geführt ist.

4. Kompostiergerät nach Anspruch 3, dadurch gekennzeichnet, daß die Walze (30) im Sinne eines Einziehens des zu zerbrechenden Materials in das Schlagwerk (16) angetrieben ist.

5. Kompostiergerät nach einem der Ansprüche 1 bis 4, dadurch gekennzeichnet, daß
(a) das den trogartigen Behälter (12) tragende fahrbare Gestell (10) auf der Seite des Schlagwerks (16) auf einem Paar von Rädern (36) abgestützt ist;
(b) an dem fahrbaren Gestell (10) auf der Seite der Antriebskraftmaschine (22) ein Paar von Stützen (38) lösbar angebracht ist; und
(c) auf der Seite der Antriebskraftmaschine (22) Kupplungsmittel (40) für eine Zugvorrichtung angebracht sind.

## Claims

1. Composting device for comminuting organic waste, particularly wood, containing
(a) a trough-like container (12) for receiving the material to be comminuted, said container being disposed on a frame (10);
(b) conveying means (14) at the bottom of this trough-shaped container (12), said conveying means conveying toward one end of the trough-shaped container (12);
(c) an impact mechanism (16) closing the trough-shaped container (12) at said one end thereof;
(d) a driving engine (22) for driving the conveying means (14) and the impact mechanism (16), said driving engine being disposed remote from the impact mechanism (16);
(e) a protective shield (24) disposed at an end of the trough-shaped container (12) which end is opposite to the impact mechanism (16);
(f) power transmission means (26) interconnecting the driving engine (22) and the impact mechanism (16) and extending along the trough-shaped container (12),
characterized in that
(g) the trough-shaped container (12) is arranged on a movable chassis (10) of its own which extends along the length of the trough-shaped container (12) and the protective shield (24);
(h) the driving engine (22) and the impact mechnaism (16) are disposed at opposite ends of the movable chassis (10) and the driving engine (22) is covered by the protective shield (24); and
(i) the power transmission means (26) extend at the trough-shaped container (12) from the driving engine (22) to the impact mechanism (16).

2. Composting device according to claim 1, characterized in that the conveying means (14) is arranged in or above a horizontal plane (28) extending through the rotational axis (18) of the impact mechanism (16).

3. Composting device according to claim 1 or 2, characterized in that a heavy roll (30) is disposed at the trough-shaped container (12) on the inlet side of the impact mechanism (16) and extends transverse above the conveying means (14), said heavy roll being supported at stop means (32) and being upwardly movably guided.

4. Composting device according to claim 3, characterized in that the roll (30) is driven in a direction for pulling the material to be crushed into the impact mechanism (16).

5. Composting device according to any one of claims 1 to 4, characterized in that
(a) the movable chassis (10) supporting the trough-shaped container (10) is supported by means of a pair of wheels (36) on the side of the impact mechanism (16);
(b) a pair of supports (38) is releasably attached to the movable chassis (10) on the side of the driving engine (22); and
(c) coupling means (40) for traction means are attached on the side of the driving engine (22).

## Revendications

1. Appareil de compostage destiné à concasser des déchets organiques, en particulier du bois, comprenant
(a) un récipient en forme d'auge (12) destiné à recevoir la matière à concasser et disposé sur un tréteau (10),
(b) un dispositif de transport (14) sur le fond de ce récipient (12) en forme d'auge, qui transporte vers une extrémité du récipient (12) en forme d'auge;
(c) un mouton (16) fermant le récipient (12) en forme d'auge à ladite extrémité;
(d) un moteur de commande (22) disposé loin du mouton (16) et destiné à l'entraînement du dispositif de transport (14) et du mouton (16);
(e) un écran (24) sur une extrémité du récipient (12) en forme d'auge, extrémité qui est opposée au mouton (16);
(f) des moyens de transmission de force (26) reliant le moteur de commande (22) et le mouton (16) et s'étendant le long du récipient (12) en forme d'auge,
caractérisé par le fait que
(g) le récipient (12) en forme d'auge est disposé sur un tréteau (10) propre mobile s'étendant sur la longueur du récipient (12) en forme d'auge et l'écran (24);
(h) le moteur de commande (22) et le mouton (16) sont disposés sur des extrémités opposées du tréteau mobile (10), et le moteur de commande (22) est couvert par l'écran (24); et
(i) les moyens de transmission de force (26) s'étendent sur le récipient (12) en forme d'auge du moteur de commande (22) vers le mouton (16).

2. Appareil de compostage selon la revendication 1, caractérisé par le fait que le dispositif de transport (14) est disposé dans ou au-dessus d'un plan horizontal (28) s'étendant par l'axe de rotation (18) du mouton (16).

3. Appareil de compostage selon la revendication 1 ou 2, caractérisé par le fait qu'un rouleau (30) lourd s'étendant transversalement au-dessus du dispositif de transport (14) est disposé sur le récipient (12) en forme d'auge du côté de l'entrée du mouton (16), rouleau qui est supporté par des moyens de butée (32) et guidé mobilement vers le haut.

4. Appareil de compostage selon la revendication 3, caractérisé par le fait que le rouleau (30) est entraîné de sorte à tirer la matière à casser dans le mouton (16).

5. Appareil de compostage selon l'une des revendications 1 à 4, caractérisé par le fait que
(a) le tréteau mobile (10) portant le récipient (12) en forme d'auge, est supporté sur le côté du mouton (16) par une paire de roues (36);
(b) une paire de supports (38) est montée de manière détachable sur le tréteau mobile (10) sur le côté du moteur de commande (22); et
(c) des moyens d'accouplement (40) pour un dispositif de traction sont montés sur le côté du moteur de commande (22).
